# EUROPEAN PATENT APPLICATION

(11) **EP 4 716 322 A1**
(43) Date of publication of application: **25.03.2026**
(21) Application number: 23937854.0
(22) Date of filing: 19.05.2023
(51) Int. Cl.: H04W 64/00

(54) **POSITIONING DETERMINATION METHOD AND APPARATUS, AND COMMUNICATION DEVICE, COMMUNICATION SYSTEM AND STORAGE MEDIUM**

(71) Applicant: Beijing Xiaomi Mobile Software Co., Ltd., Beijing 100085 (CN)
(72) Inventor: GONG, Yubing, Beijing 100085 (CN); SHEN, Yang, Beijing 100085 (CN); WANG, Xinli, Beijing 100085 (CN)
(74) Representative: Stöckeler, Ferdinand
(86) International application number: PCT/CN2023/095398
(87) International publication number: WO 2024/239175

(57) **Abstract**

The present disclosure relates to the technical field of communications, and specifically relates to a positioning determination method and apparatus, and a communication device, a communication system and a storage medium. The positioning determination method comprises: according to a user-plane positioning capability, determining whether to use user-plane positioning. In the embodiments of the present disclosure, a terminal may first determine a user-plane positioning capability before selecting user-plane positioning, thereby determining, according to the user-plane positioning capability, whether to use user-plane positioning. Accordingly, it is conducive to ensuring that user-plane positioning is selected to perform positioning only when a user-plane positioning capability meets a condition, thereby ensuring that the user-plane positioning can be successfully performed.

## Description

### FIELD

The present invention relates to the field of communication technology, and in particular to a positioning determination method, a positioning determination apparatus, a communication device, a communication system and a storage medium.

### BACKGROUND

User plane positioning or control plane positioning may be used by a terminal for positioning, but the specific positioning method needs to be further improved.

### SUMMARY

Embodiments of the present invention provide a positioning determination method, a positioning determination apparatus, a communication device, a communication system, and a storage medium to solve the technical problems in the related art.

According to a first aspect of embodiments of the present invention, a positioning determination method is provided, which is performed by a terminal. The method includes: determining whether to use user plane positioning according to a user plane positioning capability.

According to a second aspect of embodiments of the present invention, a positioning determination method is provided, which is performed by a network device. The method includes: sending second indication information to a terminal. The second indication information indicates a user plane positioning capability of the network device.

According to a third aspect of embodiments of the present invention, a positioning determination apparatus is provided, the apparatus includes: a processing module configured to determine whether to use user plane positioning according to a user plane positioning capability.

According to a fourth aspect of embodiments of the present invention, a positioning determination apparatus is provided, the apparatus includes: a sending module, configured to send second indication information to a terminal. The second indication information indicates a user plane positioning capability of a network device.

According to a fifth aspect of embodiments of the present invention, a communication device is provided, which includes one or more processors; and the processor is configured to call instructions to cause the communication device to perform any of the above positioning determination methods.

According to a sixth aspect of embodiments of the present invention, a communication system is provided, which includes a terminal and a network device, the terminal is configured to implement the positioning determination method performed by the terminal as described above, and the network device is configured to implement the positioning determination method performed by the network device as described above.

According to a seventh aspect of embodiments of the present invention, a storage medium is provided, the storage medium has stored therein instructions that, when executed on a communication device, cause the communication device to perform any of the above positioning determination methods.

According to embodiments of the present invention, before selecting user plane positioning, the terminal may first determine the user plane positioning capability, and determine whether to use the user plane positioning according to the user plane positioning capability. In this way, it is conducive to ensuring that the user plane positioning is selected for positioning in a case where the user plane positioning capability meets a required condition, which is conducive to ensuring the smooth implementation of the user plane positioning.

### BRIEF DESCRIPTION OF THE DRAWINGS

In order to more clearly illustrate the technical solutions in embodiments of the present invention, drawings used in the description of some embodiments will be briefly introduced below. Apparently, the drawings described below are only some embodiments of the present invention. For those skilled in the art, other drawings can be obtained based on these drawings without creative labor.
FIG. 1A is a schematic diagram showing an architecture of a communication system according to embodiments of the present invention.
FIG. 1B is a schematic diagram showing interactions of a positioning determination method according to embodiments of the present invention.
FIG. 2 is a schematic flowchart of a positioning determination method according to embodiments of the present invention.
FIG. 3 is a schematic flowchart of another positioning determination method according to embodiments of the present invention.
FIG. 4 is a schematic flowchart of yet another positioning determination method according to embodiments of the present invention.
FIG. 5 is a schematic flowchart of yet another positioning determination method according to embodiments of the present invention.
FIG. 6 is a schematic flowchart of yet another positioning determination method according to embodiments of the present invention.
FIG. 7 is a schematic block diagram of a positioning determination apparatus according to embodiments of the present invention.
FIG. 8 is a schematic block diagram of a positioning determination apparatus according to embodiments of the present invention.
FIG. 9 is a schematic diagram of a communication device according to embodiments of the present invention.
FIG. 10 is a schematic diagram of a chip according to embodiments of the present invention.

### DETAILED DESCRIPTION

Embodiments of the present invention provide a positioning determination method, a positioning determination apparatus, a communication device, a communication system, and a storage medium.

In a first aspect, embodiments of the present invention provide a positioning determination method, which is performed by a terminal. The positioning determination method includes: determining whether to use user plane positioning according to a user plane positioning capability.

According to above embodiment, before selecting user plane positioning, the terminal may first determine the user plane positioning capability, and determine whether to use the user plane positioning according to the user plane positioning capability. Accordingly, it is conducive to ensuring that the user plane positioning is selected for positioning when the user plane positioning capability meets the condition, which is conducive to ensuring the smooth implementation of the user plane positioning.

In combination with some embodiments of the first aspect, in some embodiments, the user plane positioning capability includes at least one: a user plane positioning capability of the terminal; or a user plane positioning capability of a network device.

In combination with some embodiments of the first aspect, in some embodiments, the user plane positioning capability of the terminal includes at least one of: a support capability for a location service message; or a support capability for a long term evolution positioning protocol message.

In combination with some embodiments of the first aspect, in some embodiments, the positioning determination method further includes: sending first indication information to the network device, and the first indication information indicates the user plane positioning capability of the terminal.

In combination with some embodiments of the first aspect, in some embodiments, the first indication information includes a first field, and the first field indicates the support capability of the terminal for the location service message and the support capability of the terminal for the long term evolution positioning protocol message.

In combination with some embodiments of the first aspect, in some embodiments, the first indication information includes a first field and a second field, the first field indicates the support capability of the terminal for the location service message, and the second field indicates the support capability of the terminal for the long term evolution positioning protocol message.

In combination with some embodiments of the first aspect, in some embodiments, the first indication information is included in at least one of: a 5G mobility management capability; or a UE policy container.

In combination with some embodiments of the first aspect, in some embodiments, the positioning determination method further includes: receiving second indication information sent by the network device, and the second indication information indicates the user plane positioning capability of the network device.

In combination with some embodiments of the first aspect, in some embodiments, the second indication information is included in at least one of: a registration accept message; or a UE policy container.

In combination with some embodiments of the first aspect, in some embodiments, the second indication information is included in the UE policy container, and the user plane positioning capability of the network device belongs to a user plane positioning related parameter.

In combination with some embodiments of the first aspect, in some embodiments, the positioning determination method further includes: updating, according to the user plane positioning related parameter, a user plane positioning related parameter in the terminal.

In a second aspect, embodiments of the present invention provide a positioning determination method, which is performed by a network device, and the method includes: sending second indication information to a terminal, and the second indication information indicates a user plane positioning capability of the network device.

According to above embodiments, the network device sends the second indication information to the terminal, so that the terminal may determine the user plane positioning capability of the network device according to the second indication information. In this way, the terminal is able to determine the user plane positioning capability of the network device.

In combination with some embodiments of the second aspect, in some embodiments, the second indication information is further configured for the terminal to determine whether to use user plane positioning.

In combination with some embodiments of the second aspect, in some embodiments, the second indication information is included in at least one of: a registration accept message; or a UE policy container.

In combination with some embodiments of the second aspect, in some embodiments, the second indication information is included in the UE policy container, and the user plane positioning capability of the network device belongs to a user plane positioning related parameter.

In combination with some embodiments of the second aspect, in some embodiments, the positioning determination method further includes: receiving first indication information sent by the terminal, the first indication information indicates a user plane positioning capability of the terminal.

In combination with some embodiments of the second aspect, in some embodiments, the positioning determination method further includes: determining whether to send the second indication information to the terminal according to the user plane positioning capability of the terminal.

In combination with some embodiments of the second aspect, in some embodiments, the first indication information includes a first field, and the first field indicates a support capability of the terminal for a location service message and a support capability of the terminal for a long term evolution positioning protocol message.

In combination with some embodiments of the second aspect, in some embodiments, the first indication information includes a first field and a second field, the first field indicates a support capability of the terminal for a location service message, and the second field indicates a support capability of the terminal for a long term evolution positioning protocol message.

In combination with some embodiments of the second aspect, in some embodiments, the first indication information is included in at least one of: a 5G mobility management capability; or a UE policy container.

In a third aspect, embodiments of the present invention provide a positioning determination apparatus, which includes: a processing module, configured to determine whether to use user plane positioning according to a user plane positioning capability.

In a fourth aspect, embodiments of the present invention provide a positioning determination apparatus, which includes: a sending module, configured to send second indication information to a terminal, and the second indication information indicates a user plane positioning capability of a network device.

In a fifth aspect, embodiments of the present invention provide a communication device, the communication device includes: one or more processors; one or more memories for storing instructions; and the processor is configured to call the instructions to cause the communication device to perform the positioning determination method as described in the first aspect and the second aspect, as well as optional implementations of the first aspect and the second aspect.

In a sixth aspect, embodiments of the present invention provide a communication system, which includes: a terminal, an access network device, and a core network device; the terminal is configured to perform the method as described in the first aspect and the second aspect, as well as optional implementations of the first aspect and the second aspect, and the access network device is configured to perform the method as described in the first aspect and the second aspect, as well as optional implementations of the first aspect and the second aspect.

In a seventh aspect, embodiments of the present invention provide a storage medium having stored therein instructions that, when executed on a communication device, cause the communication device to perform the method described in the first aspect and the second aspect, as well as optional implementations of the first aspect and the second aspect.

In an eighth aspect, embodiments of the present invention provide a program product that, when executed by a communication device, cause the communication device to perform the method described in the first aspect and the second aspect, as well as optional implementations of the first aspect and the second aspect.

In a ninth aspect, embodiments of the present invention provide a computer program that, when run on a computer, cause the computer to perform the method described in the first aspect and the second aspect, as well as optional implementations of the first aspect and the second aspect.

It is understandable that the positioning determination apparatus, the communication device, the communication system, the storage medium, the program product, and the computer program as described above are all used to execute the method proposed in embodiments of the present invention. Therefore, the beneficial effects achievable thereby can refer to the beneficial effects as described in the corresponding method, and will not be repeated here.

Embodiments of the present invention provide the positioning determination method and apparatus, the communication device, the communication system, the storage medium. In some embodiments, terms like "positioning determination method", "information processing method", and "communication method" are interchangeable, terms like "positioning determination apparatus", "information processing apparatus", and "communication apparatus" are interchangeable, and terms like "positioning determination system", "information processing system", and "communication system" are interchangeable.

Embodiments of the present invention are not exhaustive, but are examples of some embodiments, and are not intended to constitute a limitation on the scope of protection of the present invention. In the absence of contradiction, each step in a certain embodiment may be implemented as an independent embodiment, and various steps may be arbitrarily combined. For example, a solution obtained after removing one or more steps from a certain embodiment may also be implemented as an independent embodiment, and steps in a certain embodiment may be arbitrarily exchanged in order. In addition, optional implementations in a certain embodiment may be arbitrarily combined. In addition, various embodiments may be arbitrarily combined, for example, some or all of the steps of different embodiments may be arbitrarily combined, and a certain embodiment may be arbitrarily combined with an optional implementation of other embodiments.

In various embodiments of the present invention, unless specified otherwise or there is a logical conflict, terms and/or descriptions among various embodiments are of consistency and may be referenced to each other, and technical features in different embodiments may be combined to form a new embodiment based on their internal logical relationships.

Terms used in embodiments of the present invention are for the purpose of describing specific embodiments and are not intended to limit the present invention.

In embodiments of the present invention, unless specified otherwise, an element expressed in the singular form, such as expressed with words like "a", "an", "the", "described above", "said", "aforementioned", "this", etc., may mean "one and only one", or mean "one or more", "at least one", etc.

In embodiments of the present invention, "a plurality of" refers to two or more.

In some embodiments, phrases like "at least one of", "one or more", "a plurality of", "multiple", etc. may be used interchangeably.

The prefixes such as "first" and "second" in embodiments of the present invention are used to distinguish different objects described, and do not constitute restrictions on the position, order, priority, quantity or content of the described objects. The statement for the described objects refers to the description in the context of the claims or embodiments, and the use of prefixes should not bring unnecessary restrictions. For example, if the described objects are "fields", such as "first field" and "second field", the ordinal numbers, i.e., "first" and "second", before these "fields" do not limit positions or order of these "fields", and the "first" and "second" do not limit whether the "fields" they define are in the same message, nor do they limit the order of the "first field" and the "second field". For another example, if the described objects are "levels", such as "first level" and "second level", the ordinal numbers before these "levels" do not limit the priority between these "levels". For another example, the number of the described object is not limited by the ordinal number, the number of the described object may be one or more. Taking "first apparatus" as an example, the number of the "apparatus" may be one or more. In addition, the objects defined by different prefixes may be the same or different. For example, if the described object is "apparatus", then "first apparatus" and "second apparatus" may be the same apparatus or different apparatuses, and their types may be the same or different. For another example, if the described object is "information", then "first information" and "second information" may be the same information or different information, and their contents may be the same or different.

In some embodiments, phrases such as "in response to...", "in response to determining...", "in case of...", "upon...", "when...", "if..." or the like may be used interchangeably.

In some embodiments, terms such as "greater than", "greater than or equal to", "not less than", "more than", "more than or equal to", "not less than", "higher than", "higher than or equal to", "not lower than", and "above" are interchangeable, and terms such as "smaller than", "smaller than or equal to", "not greater than", "less than", "less than or equal to", "no more than", "lower than", "lower than or equal to", "not higher than", and "below" are interchangeable.

In some embodiments, apparatuses or the like may be interpreted as physical or virtual, and their names are not limited to those recorded in embodiments.

Terms such as "apparatus", "equipment", "device", "circuit", "network element", "node", "function", "unit", "section", "system", "network", "chip", "chip system", "entity", and "body" may be used interchangeably.

In some embodiments, the term "network" may be interpreted as devices contained within the network (e.g., access network device, core network device, etc.)

In some embodiments, terms such as "access network device (AN device)", "radio access network device (RAN device)", "base station (BS)", "radio base station", "fixed station", "node", "access point", "transmission point (TP)", "reception point (RP)", "transmission/reception point (TRP)", "panel (panel)", "antenna panel", "antenna array", "cell", "macro cell", "small cell", "femto cell", "pico cell", "sector", "cell group", "serving cell", "carrier", "component carrier", "bandwidth part (BWP)" and the like may be used interchangeably.

In some embodiments, terms such as "terminal", "terminal device", "user equipment (UE)", "user terminal" "mobile station (MS)", "mobile terminal (MT)", subscriber station, mobile unit, subscriber unit, wireless unit, remote unit, mobile device, wireless device, wireless communication device, remote device, mobile subscriber station, access terminal, mobile terminal, wireless terminal, remote terminal, handset, user agent, mobile client, client and the like may be used interchangeably.

In some embodiments, an access network device, a core network device, or a network device may be replaced by a terminal. For example, the communication between a terminal and an access network device, a core network device or a network device may be replaced by the communication structure among terminals (may also be referred to as for example device-to-device (D2D), vehicle-to-everything (V2X), etc.), which may also apply various embodiments of the present invention. In this case, a structure may be set in which the terminal has all or part of functions of the access network device. In addition, terms such as "uplink" and "downlink" may also be replaced by a term (e.g., "side") corresponding to the communication among terminals. For example, an uplink channel, a downlink channel, etc. may be replaced by a side channel, and an uplink, a downlink, etc. may be replaced by a sidelink.

In some embodiments, a terminal may be replaced by an access network device, a core network device, or a network device. In this case, a structure may be set in which the access network device, the core network device, or the network device has all or part of functions of the terminal.

In some embodiments, acquisition of data, information, etc. may comply with the laws and regulations of the country where the activity takes place.

In some embodiments, data, information, etc. may be obtained with the user's consent.

In addition, each element, each row, or each column in the table of embodiments of the present invention may be implemented as an independent embodiment, and the combination of any element, any row, and/or any column may also be implemented as an independent embodiment.

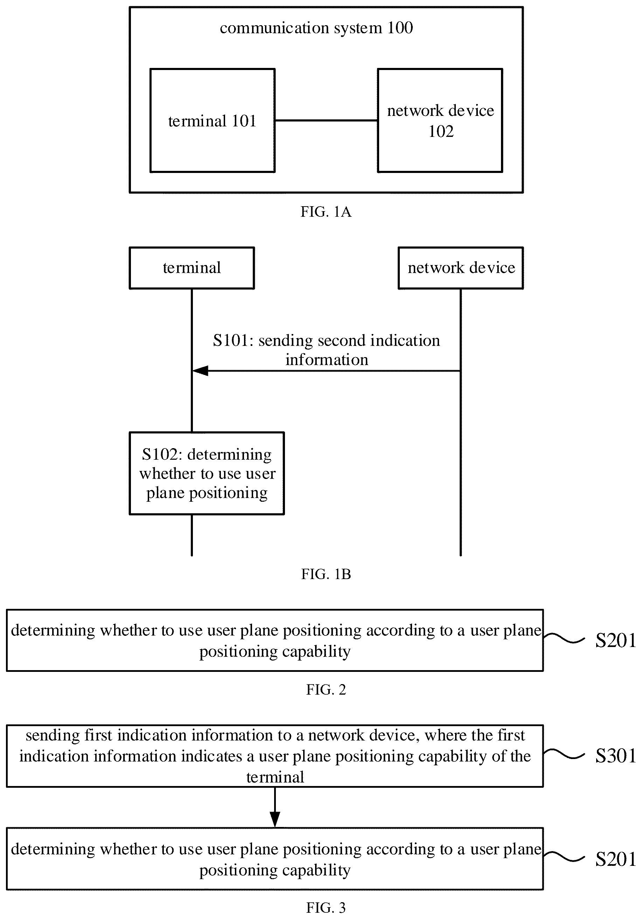

FIG. 1A is a schematic diagram showing an architecture of a communication system according to embodiments of the present invention.

As shown in FIG. 1A, the communication system 100 includes a terminal 101 and a network device 102.

In some embodiments, the network device includes at least one of: an access network device, or a core network device.

In some embodiments, the core network device may be a device including one or more network elements, or may be a plurality of devices or a group of devices, each including all or part of the one or more network elements. The network element may be virtual or physical. The core network may include, for example, at least one of an Evolved Packet Core (EPC), a 5G Core Network (5GCN), and a Next Generation Core (NGC).

In some embodiments, the terminal 101 includes, for example, at least one of a mobile phone, a wearable device, an Internet of Things device, a car with a communication function, a smart car, a tablet computer (Pad), a computer with a wireless transceiver function, a virtual reality (VR) terminal, an augmented reality (AR) terminal, a wireless terminal in industrial control, a wireless terminal in self-driving, a wireless terminal in remote medical surgery, a wireless terminal in smart grid, a wireless terminal in transportation safety, a wireless terminal in smart city, or a wireless terminal in a smart home, but is not limited thereto.

In some embodiments, the access network device 102 is for example a node or device that connects a terminal to a wireless network. The access network device may include at least one of an evolved NodeB (eNB), a next generation eNB (ng-eNB), a next generation NodeB (gNB), a node B (NB), a home node B (HNB), a home evolved nodeB (HeNB), a wireless backhaul device, a radio network controller (RNC), a base station controller (BSC), a base transceiver station (BTS), a base band unit (BBU), or a mobile switching center in a 5G communication system, a base station, an open base station (Open RAN), or a cloud base station (Cloud RAN) in a 6G communication system, a base station in other communication systems, or an access node in a Wi-Fi system, but is not limited thereto.

In some embodiments, the technical solutions of the present invention are applicable to the Open RAN architecture. In this case, interfaces between access network devices or within an access network device involved in embodiments of the present invention may be internal interfaces of the Open RAN, and the processes and information exchange between these internal interfaces can be implemented through software or programs.

In some embodiments, the access network device may be composed of a central unit (CU) and distributed units (DUs), where the CU may also be referred to as a control unit. The CU-DU structure allows to split protocol layers of the access network device, functions of some protocol layers are set in the CU for centralized control, functions of some or all of the remaining protocol layers are distributed in DUs, and the DUs are centrally controlled by the CU, but the present invention is not limited thereto.

It may be understood that the communication system described in embodiments of the present invention is for the purpose of more clearly illustrating the technical solutions of embodiments of the present invention, and does not constitute a limitation on the technical solutions proposed in embodiments of the present invention. A person of ordinary skill in the art knows that with the evolution of the system architecture and the emergence of new service scenarios, the technical solutions proposed in embodiments of the present invention are also applicable to similar technical problems.

The following embodiments of the present invention may be applied to the communication system or some of entities shown in FIG. 1A, but are not limited thereto. The entities shown in FIG. 1A are examples, and the communication system may include all or part of the entities in FIG. 1A, or may include other entities not shown in FIG. 1A, and the number and form of each kind of entity are arbitrary, each entity may be a physical entity or a virtual entity, and the connection relationship among the entities is an example, and these entities may be connected or disconnected with each other, and the connection may be in any manner, either a direct connection or an indirect connection, or either a wired connection or a wireless connection.

Various embodiments of the present invention may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 5G new radio (NR), Future Radio Access (FRA), New Radio Access Technology (RAT), New Radio (NR), New radio access (NX), Future generation radio access (FX), Global System for Mobile communications (GSM (registered trademark)), CDMA2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), Public Land Mobile Network (PLMN) network, Device-to-Device (D2D) system, Machine-to-Machine (M2M) system, Internet of Things (IoT) system, Vehicle-to-Everything (V2X), systems using other communication methods, next-generation systems expanded based thereon, etc. In addition, multiple systems may also be combined (for example, a combination of LTE or LTE-A and 5G) for application.

In some embodiments, positioning in which a terminal participates may include at least one of: user plane positioning and control plane positioning.

The terminal may use user plane positioning or control plane positioning. However, if the terminal directly chooses to use user plane positioning without considering the user plane positioning capability, it may result in that the user plane positioning cannot be performed smoothly.

In some embodiments, the term "user plane positioning" may be expressed as "first positioning" or other terms, which is not specifically limited in the present invention.

In some embodiments, the term "control plane positioning" may be expressed as "second positioning" or other terms, which is not specifically limited in the present invention.

In some embodiments, the user plane positioning refers to that positioning related information is transmitted between the terminal and the core network device via a user plane connection.

For example, the core network device may include a location management function (LMF).

For example, the positioning related information includes at least one of:
a Location Services (LCS) message; or
a long term evolution positioning protocol (LTE Positioning Protocol, LPP) message.

For example, the user plane connection includes a connection between the terminal and the LMF, and the specific meaning may refer to the relevant technology, which will not be elaborated in the present invention. The meaning of the control plane positioning may also refer to the relevant technology, which will not be elaborated here.

In an example, the terminal described below may be the terminal 100 in FIG. 1A, and the network device described below may be the network device 102 in FIG. 1A. More specifically, the network device described below may be the access network device in FIG. 1A, or may be the access network device and the core network device in FIG. 1A. In an example, the core network device may include at least one of: an access and mobility management function, a location management function, or a policy control function.

FIG. 1B is a schematic diagram showing interactions of a positioning determination method according to embodiments of the present invention The positioning determination method may be applied to a communication system.

As shown in FIG. 1B, the positioning determination method includes:

In step S101, a network device sends second indication information to a terminal.

In some embodiments, the second indication information indicates a user plane positioning capability of the network device.

In some embodiments, the second indication information is also used by the terminal to determine whether to use user plane positioning.

In step S102, the terminal determines whether to use user plane positioning.

In some embodiments, the terminal may determine the user plane positioning capability of the network device according to the second indication information.

In some embodiments, the terminal may determine whether to use the user plane positioning according to a user plane positioning capability of the terminal and/or the user plane positioning capability of the network device.

In some embodiments, the user plane positioning capability of the terminal includes at least one of: a support capability for a location service message; or a support capability for a long term evolution positioning protocol message.

In some embodiments, the positioning determination method further includes: sending first indication information to the network device, and the first indication information indicates a user plane positioning capability of the terminal.

In some embodiments, the first indication information indicates the support capability of the terminal for the location service message and the support capability of the terminal for the long term evolution positioning protocol message.

In some embodiments, the network device may determine whether to send the second indication information to the terminal according to the user plane positioning capability of the terminal.

In some embodiments, the first indication information includes a first field and a second field, the first field indicates the support capability of the terminal for the location service message, and the second field indicates the support capability of the terminal for the long term evolution positioning protocol message.

In some embodiments, the first indication information is included in at least one of: a 5G mobility management capability; or a UE policy container.

In some embodiments, the second indication information is included in at least one of: a registration accept message; or a UE policy container.

In some embodiments, the second indication information is included in the UE policy container, and the user plane positioning capability of the network device belongs to a user plane positioning related parameter.

In some embodiments, the positioning determination method further includes: updating, according to the user plane positioning related parameter, a user plane positioning related parameter in the terminal.

In a first aspect, embodiments of the present invention provide a positioning determination method.

FIG. 2 is a schematic flowchart of a positioning determination method according to embodiments of the present invention. The positioning determination method shown in these embodiments may be performed by a terminal, and the terminal may communicate with a network device.

The communication method involved in embodiments of the present invention may include at least one of step S101 to step S102. For example, step S101 may be implemented as an independent embodiment, step S102 may be implemented as an independent embodiment, and step S101+step S102 may be implemented as an independent embodiment, but the present invention are not limited thereto.

In some embodiments, steps S101 and S102 may be performed in a reverse order or may be simultaneously.

In some embodiments, step S101 is optional, and one or more of these steps may be omitted or replaced in different embodiments.

In some embodiments, step S102 is optional, and one or more of these steps may be omitted or replaced in different embodiments.

For implementations related to the terminal and the network device shown in FIG. 1B, reference may be made to embodiments described hereinafter, which will not be elaborated here.

In an example, the terminal described below may be the terminal 101 in FIG. 1A described above, the network device described below may be the network device 102 in FIG. 1A described above, and the network device 102 may include at least one of: an access network device, or a core network device. In an example, the core network device may include at least one of: an access and mobility management function, a location management function, or a policy control function.

As shown in FIG. 2, the positioning determination method may include the following steps:

In step S201, it is determined whether to use user plane positioning according to a user plane positioning capability.

In embodiments of the present invention, before selecting the user plane positioning, the terminal may first determine the user plane positioning capability, and determine whether to use the user plane positioning according to the user plane positioning capability. Accordingly, it is conducive to ensuring that the user plane positioning is selected for positioning in a case where the user plane positioning capability meets a required condition, which is conducive to ensuring the smooth implementation of the user plane positioning.

In some embodiments, the user plane positioning capability includes at least one of:
a user plane positioning capability of the terminal; or
a user plane location capability of the network device.

For example, the user plane positioning capability of the terminal refers to whether the terminal has the capability of user plane positioning, or may be described as whether the terminal supports the use of user plane positioning. For example, the user plane positioning capability of the network device refers to whether the network device has the capability of user plane positioning, or may be described as whether the network device supports the use of user plane positioning.

In some embodiments, the user plane positioning capability of the terminal may be determined by the terminal. The user plane positioning capability of the network device may be sent by the network device to the terminal, or may be specified by a protocol. The following embodiments are mainly described with reference to examples where the user plane positioning capability of the network device is sent by the network device to the terminal.

In some embodiments, the terminal may determine whether to use the user plane positioning only according to the user plane positioning capability of the terminal.

For example, in a case where it is determined that the user plane positioning capability of the terminal is that the terminal has the user plane positioning capability, it may be determined to use the user plane positioning; in a case where it is determined that the user plane positioning capability of the terminal is that the terminal has no user plane positioning capability, it may be determined not to use the user plane positioning, for example, the control plane positioning may be selected for use.

In some embodiments, the terminal may determine whether to use the user plane positioning only according to the user plane positioning capability of the network device.

For example, in a case where it is determined that the user plane positioning capability of the network device is that the network device has the user plane positioning capability, it may be determined not to use the user plane positioning, for example, the control plane positioning may be selected for use; in a case where it is determined that the user plane positioning capability of the terminal is that the network device has no user plane positioning capability, it may be determined to use the user plane positioning.

In some embodiments, the terminal may determine whether to use the user plane positioning according to the user plane positioning capability of the terminal and the user plane positioning capability of the network device.

For example, in a case where it is determined that the user plane positioning capability of the terminal is that the terminal has the user plane positioning capability, and the user plane positioning capability of the network device is that the network device has the user plane positioning capability, it may be determined to use the user plane positioning; in a case where it is determined that the user plane positioning capability of the terminal is that the terminal has no user plane positioning capability, and the user plane positioning capability of the network device is that the network device has the user plane positioning capability, it may be determined not to use the user plane positioning, for example, the control plane positioning may be selected for use.

It should be noted that the above descriptions regarding how the terminal determines whether to use the user plane positioning only involve some examples of how the terminal determines whether to use the user plane positioning in the present invention. The specific way in which the terminal determines whether to use the user plane positioning may be implemented based on configuration information, and the configuration information includes at least one of: network configuration information, or local configuration information, which is not limited in the present invention.

For example, the configuration information is that: in a case where the terminal has the user plane positioning capability, and the network device has the user plane positioning capability, the terminal uses the user plane positioning.

In a case where the terminal determines that the user plane positioning capability of the terminal is that the terminal has the user plane positioning capability, and the user plane positioning capability of the network device is that the network device has the user plane positioning capability, the terminal may determine to use the user plane positioning.

For example, the configuration information is that: in a case where the terminal has the user plane positioning capability, and the network device has no user plane positioning capability, the terminal uses the user plane positioning.

In a case where the terminal determines that the user plane positioning capability of the terminal is that the terminal has the user plane positioning capability, and the user plane positioning capability of the network device is that the network device does not have the user plane positioning capability, the terminal may determine to use the user plane positioning.

For example, the configuration information includes priority information, and the priority information indicates a priority of the user plane positioning capability of the terminal and a priority of the user plane positioning capability of the network device.

In a case where the terminal determines that the user plane positioning capability of the terminal is that the terminal has the user plane positioning capability, the user plane positioning capability of the network device is that the network device has the user plane positioning capability, and the priority information is that the priority of the user plane positioning capability of the terminal is higher than the priority of the user plane positioning capability of the network device, the terminal may determine to use the user plane positioning.

In a case where the terminal determines that the user plane positioning capability of the terminal is that the terminal has the user plane positioning capability, the user plane positioning capability of the network device is that the network device has the user plane positioning capability, and the priority information is that the priority of the user plane positioning capability of the terminal is lower than the priority of the user plane positioning capability of the network device, the terminal may determine to use the control plane positioning.

In some embodiments, the user plane positioning capability of the terminal includes at least one of:
a support capability for a location service message; or
a support capability for a long term evolution positioning protocol message.

For example, in a case where the terminal's capability supports the location service message, regardless of whether the terminal's capability supports the long term evolution positioning protocol message, it may be determined that the user plane positioning capability of the terminal is that the terminal has the user plane positioning capability.

For example, in a case where the terminal's capability does not support the location service message, regardless of whether the terminal's capability supports the long term evolution positioning protocol message, it may be determined that the user plane positioning capability of the terminal is that the terminal has no user plane positioning capability.

For example, in a case where the terminal's capability supports the long term evolution positioning protocol message, regardless of whether the terminal's capability supports the location service message, it may be determined that the user plane positioning capability of the terminal is that the terminal has the user plane positioning capability.

For example, in a case where the terminal's capability does not support the long term evolution positioning protocol message, regardless of whether the terminal's capability supports the location service message, it may be determined that the user plane positioning capability of the terminal is that the terminal has no user plane positioning capability.

For example, in a case where the terminal's capability supports both the long term evolution positioning protocol message and the location service message, it is determined that the user plane positioning capability of the terminal is that the terminal has the user plane positioning capability.

For example, in a case where the terminal's capability does not support the long term evolution positioning protocol message, or the terminal's capability does not support the location service message, it is determined that the user plane positioning capability of the terminal is that the terminal has no user plane positioning capability.

For example, in a case where the terminal's capability does not support the long term evolution positioning protocol message, and the terminal's capability does not support the location service message, it is determined that the user plane positioning capability of the terminal is that the terminal has no user plane positioning capability.

FIG. 3 is a schematic flowchart of another positioning determination method according to embodiments of the present invention. The method shown in these embodiments may be performed by the terminal. As shown in FIG. 3, the positioning determination method further includes the following step.

In step S301, first indication information is sent to the network device, and the first indication information indicates the user plane positioning capability of the terminal.

It should be noted that for other contents involved in these embodiments, please refer to the description of the relevant contents in the previous embodiments, which will not be repeated here.

In some embodiments, the terminal may send the first indication information to the network device. For example, the network device may include a core network device, and the terminal may send the first indication information to the core network device in a registration procedure or a policy control function (PCF) update procedure.

The first indication information may indicate the user plane positioning capability of the terminal, and accordingly, the core network device may determine the user plane positioning capability of the terminal according to the first indication information.

In a further embodiment, the network device may determine whether to send second indication information to the terminal according to the user plane positioning capability of the terminal, and the second indication information indicates the user plane positioning capability of the network device.

For example, the network device sends the second indication information to the terminal in a case where the network device determines, according to the first indication information, that the terminal has the user plane positioning capability.

For example, the network device sends the second indication information to the terminal in a case where the network device determines, according to the first indication information, that the terminal has no user plane positioning capability.

It should be noted that the network device may send the second indication information to the terminal, with consideration or without consideration the user plane positioning capability of the terminal. For example, the network device may send the second indication information to the terminal without determining whether the terminal has the user plane positioning capability (for example, without receiving the first indication information).

In some embodiments, the first indication information is included in at least one of: a 5G mobility management (SGMM) capability; or a UE policy container.

The following first illustrates the case where the first indication information is included in the 5GMM capability through several embodiments.

In some embodiments, the first indication information includes a first field, and the first field indicates the support capability of the terminal for the location service message and the support capability of the terminal for the long term evolution positioning protocol message.

The first indication information may indicate both the support capability of the terminal for the location service message and the support capability of the terminal for the long term evolution positioning protocol message through the first field. For example, two situations may be indicated: one is that the terminal supports both the location service message and the long term evolution positioning protocol message, and the other one is that the terminal supports neither the location service message nor the long term evolution positioning protocol message.

For example, the 5G management capability may include 15 octets, each occupies 8 bits. For example, the last 6 bits of the 9th octet and the bits in the 9th to 15th octets are spare, and the first field of the first indication information may occupy 1 bit of the spare bits, for example, the first field may be located at the 3rd bit of the 9th octet.

For example, a value of the first field of 1 may indicate that the terminal supports both the location service message and the long term evolution positioning protocol message. A value of the first field of 0 may indicate that the terminal supports the location service message, but does not support the long-term evolution positioning protocol message.

It should be noted that the position of the first indication information described in the above embodiment is only an example and does not constitute a limitation on the position of the first indication information.

In some embodiments, the first indication information includes a first field and a second field, the first field indicates the support capability of the terminal for the location service message, and the second field indicates the support capability of the terminal for the long term evolution positioning protocol message.

The first indication information may indicate the support capability of the terminal for the location service message and the support capability of the terminal for the long term evolution positioning protocol message, respectively. For example, the first indication information includes the first field and the second field, the first field may indicate whether the terminal supports the location service message, and the second field may indicate whether the terminal supports the long term evolution positioning protocol message.

For example, the 5G management capability may include 15 octets, each occupies 8 bits. For example, the last 6 bits of the 9th octet and the bits in the 9th to 15th octets are spare, and the first indication information may occupy 2 bits of the spare bits, for example, the first indication information may be located at the 3rd and 4th bits of the 9th octet, the first field may be located at the 3rd bit of the 9th octet, and the second field may be located at the 4th bit of the 9th octet.

For example, a value of the first field of 1 may indicate that the terminal supports the long term evolution positioning protocol message, and a value of the first field of 0 may indicate that the terminal does not support the long term evolution positioning protocol message.

For example, a value of the second field of 1 may indicate that the terminal supports the location service message, and a value of the second field of 0 may indicate that the terminal does not support the location service message.

It should be noted that the position of the first indication information described in the above embodiment is only an example and does not constitute a limitation on the position of the first indication information (including the position of the second field or a third field).

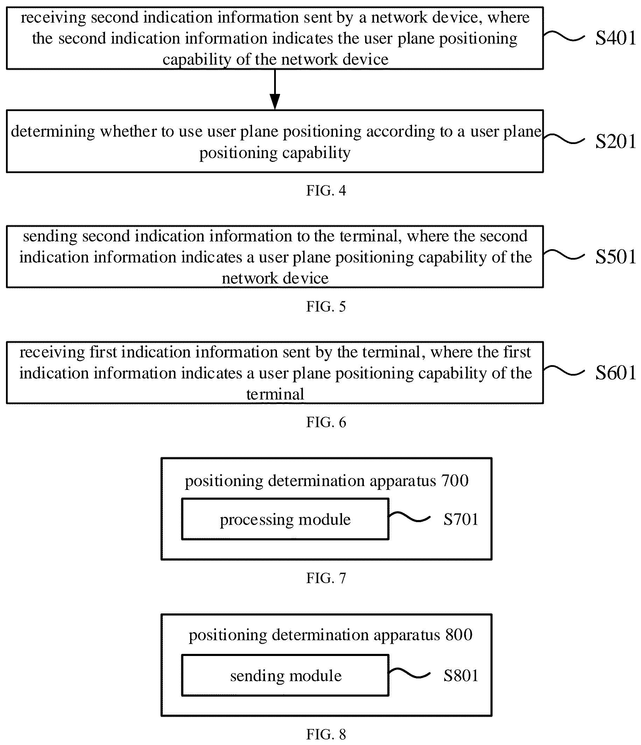

FIG. 4 is a schematic flowchart of yet another positioning determination method according to embodiments of the present invention. The method shown in these embodiments may be performed by the terminal. As shown in FIG. 4, the positioning determination method further includes the following step.

In step S401, second indication information sent by the network device is received, and the second indication information indicates the user plane positioning capability of the network device.

It should be noted that the embodiments shown in FIG. 4 may be implemented independently or in combination with at least one of other embodiments in the present invention, which may be selected as needed, and is not limited in the present invention. For example, each of them may be combined with an embodiment as described with reference to FIG. 2, an embodiment as described with reference to FIG. 3, or embodiments as described with reference to FIG. 2 and FIG. 3.

In some embodiments, the network device may send the second indication information to the terminal, and the terminal may determine the user plane positioning capability of the network device according to the second indication information.

The network device may send the second indication information to the terminal in a registration procedure, or may send the second indication information to the terminal in other procedures, such as a policy control function update procedure triggered by the network device.

In some embodiments, the second indication information is included in at least one of: a registration accept message; or a UE policy container.

In some embodiments, the UE policy container may be included in a downlink non-access stratum transport (DL NAS TRANSPORT) message, where NAS stands for non-access stratum. The policy control function may send Namf_Communication_N1N2MessageTransfer including the DL NAS TRANSPORT message to the access and mobility management function (AMF), and the AMF transparently transmits the UE policy container therein to the terminal.

In some embodiments, the second indication information is included in the UE policy container, and the user plane positioning capability of the network device belongs to a user plane positioning related parameter, and the terminal may perform the user plane positioning based on the user plane positioning related parameter. Besides the user plane positioning capability of the network device, the user plane positioning related parameter may also include a user plane positioning related policy, etc.

In some embodiments, the positioning determination method further includes: updating, according to the user plane positioning related parameter sent by the network device, a user plane positioning related parameter in the terminal. After receiving the user plane positioning related parameter, the terminal may update the user plane positioning related parameter in the terminal, for example, updating the user plane positioning capability of the network already in the terminal.

In a further embodiment, the terminal may determine whether to use the user plane positioning according to the updated user plane positioning capability of the network, the user plane positioning capability of the terminal and configuration information (such as the configuration information described above, which will not be repeated here).

In some embodiments, the network device may send the second indication information to the terminal in the registration procedure, and the second indication information may be included in the registration accept message.

For example, in the registration procedure, the terminal may send a registration request message to the network device.

The registration request message may include a 5G mobility management capability information element (IE). In some embodiments, the 5G mobility management capability may further include the first indication information sent by the terminal to the network device, and the first indication information may indicate the user plane positioning capability of the terminal.

After receiving the registration request message, the network device may initiate 5G mobility management common procedures, e.g. identification, authentication and security procedures during the registration procedure, based on the information in the registration request message.

If the network device accepts the registration request of the terminal, the network device (e.g., AMF) may send the registration accept message to the terminal. The registration accept message may include the above-mentioned second indication information to indicate the user plane positioning capability of the network device.

In some embodiments, the network device may send the second indication information to the terminal in the case where the PCF receives the request of the terminal, and the second indication information may be included in the UE policy container. The request of the terminal includes at least one of: an initial registration request of the terminal, a request to re-register to the 5G system.

For example, the terminal may newly add the first indication information in the UE policy container, and the first indication information may indicate the user plane positioning capability of the terminal. In the registration procedure, the registration request including the UE policy container may be sent to the network device (e.g., AMF).

The PCF may be notified when the AMF receives the UE policy container, and the AMF may send the UE policy container to the PCF, for example, via a Namf_Communication_N1N2MessageTransfer service. Besides the UE policy container, the AMF may also send a subscriber permanent identifier (SUPI) and other information to the PCF.

Further, the PCF may determine the user plane positioning related parameter and send it to the AMF through the UE policy container, and the user plane positioning related parameter includes at least one of: the second indication information, or the user plane positioning related policy. Accordingly, the UE policy container includes the second indication information, and the AMF may transparently transmit the UE policy container received from the PCF to the terminal, for example, the AMF may transmit a downlink non-access stratum transport message including the UE policy container to the terminal, so that the terminal may determine the user plane positioning capability of the network device according to the second indication information in the UE policy container.

In a further embodiment, the terminal may also update the user plane positioning related parameter in the terminal according to the received user plane positioning related parameter, for example, update the user plane positioning capability of the network already existed in the terminal; and send the update result to the AMF.

In a further embodiment, the terminal may determine whether to use the user plane positioning according to the updated user plane positioning capability of the network, the user plane positioning capability of the terminal and configuration information (such as the configuration information described above, which will not be repeated here).

In some embodiments, the network device may send the second indication information to the terminal in a case where the PCF does not receive the request of the terminal, and the second indication information may be included in the UE policy container. The request of the terminal includes at least one of: an initial registration request of the terminal, a request to re-register to the 5G system.

For example, in a case where a first condition is met, the PCF may actively determine whether UE policy information of the terminal needs to be updated. The first condition includes at least one of: a change in the location of the terminal, or a change in single network slice selection assistance information (S-NSSAI) subscribed by the PCF.

In the case where the PCF determines that the UE policy information of the terminal needs to be updated, the PCT may send the UE policy container including updated UE policy information to the AMF, and the updated UE policy information includes the second indication information. The AMF may transparently transmit the UE policy container received from the PCF to the terminal, for example, the AMF may transmit a downlink non-access stratum transport message including the UE policy container to the terminal, so that the terminal may determine the user plane positioning capability of the network device according to the second indication information in the UE policy container.

In a further embodiment, the terminal may also update the user plane positioning related parameter in the terminal according to the received user plane positioning related parameter, for example, update the user plane positioning capability of the network already existed in the terminal; and send the update result to the AMF.

In a further embodiment, the terminal may determine whether to use the user plane positioning according to the updated user plane positioning capability of the network, the user plane positioning capability of the terminal and configuration information (such as the configuration information described above, which will not be repeated here).

In some embodiments, after the terminal determines whether to use the user plane positioning according to the user plane positioning capability, the terminal may initiate a user plane connection procedure. For the user plane connection procedure, reference may be made to the clause 3GPP TS 23.273, which will not be repeated in the present invention.

In a second aspect, embodiments of the present invention provide a positioning determination method. The positioning determination method shown in these embodiments may be performed by a network device, and the network device can communicate with a terminal.

FIG. 5 is a schematic flowchart of yet another positioning determination method according to embodiments of the present invention. The method shown in these embodiments may be performed by the network device. As shown in FIG. 5, the positioning determination method includes the following step.

In step S501, second indication information is sent to a terminal, and the second indication information indicates a user plane positioning capability of the network device.

It should be noted that the embodiments shown in FIG. 5 may be implemented independently or in combination with at least one of other embodiments in the present invention, which may be selected as needed, and is not limited in the present invention. For example, each of them may be combined with an embodiment as described with reference to at least one of FIG. 2 to FIG. 4.

In some embodiments, the network device may send the second indication information to the terminal, and the terminal may determine the user plane positioning capability of the network device according to the second indication information.

The network device may send the second indication information to the terminal in a registration procedure, or may send the second indication information to the terminal in other procedures, such as a policy control function update procedure triggered by the network device.

According to embodiments of the present invention, the network device sends the second indication information to the terminal, so that the terminal may determine the user plane positioning capability of the network device according to the second indication information. In this way, the terminal is able to determine the user plane positioning capability of the network device.

In some embodiments, the second indication information is also used by the terminal to determine whether to use user plane positioning.

According to embodiments of the present invention, the terminal may determine whether to use the user plane positioning at least according to the user plane positioning capability of the network device. Accordingly, it is conducive to ensuring that the user plane positioning is selected for positioning in a case where the user plane positioning capability meets a required condition, which is conducive to ensuring the smooth implementation of the user plane positioning.

In some embodiments, the terminal may determine whether to use the user plane positioning only according to the user plane positioning capability of the network device.

For example, in a case where it is determined that the user plane positioning capability of the network device is that the network device has the user plane positioning capability, it may be determined not to use the user plane positioning, for example, the control plane positioning may be selected for use; in a case where it is determined that the user plane positioning capability of the terminal is that the network device has no user plane positioning capability, it may be determined to use the user plane positioning.

However, factors considered by the terminal for determining whether to use the user plane positioning may not be limited to whether the network device has the user plane positioning capability.

In some embodiments, the terminal may determine whether to use the user plane positioning according to a user plane positioning capability of the terminal and the user plane positioning capability of the network device.

For example, in a case where it is determined that the user plane positioning capability of the terminal is that the terminal has the user plane positioning capability, and the user plane positioning capability of the network device is that the network device has the user plane positioning capability, it may be determined to use the user plane positioning; in a case where it is determined that the user plane positioning capability of the terminal is that the terminal has no user plane positioning capability, and the user plane positioning capability of the network device is that the network device has the user plane positioning capability, it may be determined not to use the user plane positioning, for example, the control plane positioning may be selected for use.

In some embodiments, the terminal may determine whether to use the user plane positioning only according to the user plane positioning capability of the terminal.

For example, in a case where it is determined that the user plane positioning capability of the terminal is that the terminal has the user plane positioning capability, it may be determined to use the user plane positioning; in a case where it is determined that the user plane positioning capability of the terminal is that the terminal has no user plane positioning capability, it may be determined not to use the user plane positioning, for example, the control plane positioning may be selected for use.

It should be noted that the above descriptions regarding how the terminal determines whether to use the user plane positioning only involve some examples of how the terminal determines whether to use the user plane positioning in the present invention. The specific way in which the terminal determines whether to use the user plane positioning may be implemented based on configuration information, and the configuration information includes at least one of: network configuration information, or local configuration information, which is not limited in the present invention.

For example, the configuration information is that: in a case where the terminal has the user plane positioning capability, and the network device has the user plane positioning capability, the terminal uses the user plane positioning.

In a case where the terminal determines that the user plane positioning capability of the terminal is that the terminal has the user plane positioning capability, and the user plane positioning capability of the network device is that the network device has the user plane positioning capability, the terminal may determine to use the user plane positioning.

For example, the configuration information is that: in a case where the terminal has the user plane positioning capability, and the network device has no user plane positioning capability, the terminal uses the user plane positioning.

In a case where the terminal determines that the user plane positioning capability of the terminal is that the terminal has the user plane positioning capability, and the user plane positioning capability of the network device is that the network device does not have the user plane positioning capability, the terminal may determine to use the user plane positioning.

For example, the configuration information includes priority information, and the priority information indicates a priority of the user plane positioning capability of the terminal and a priority of the user plane positioning capability of the network device.

In a case where the terminal determines that the user plane positioning capability of the terminal is that the terminal has the user plane positioning capability, the user plane positioning capability of the network device is that the network device has the user plane positioning capability, and the priority information is that the priority of the user plane positioning capability of the terminal is higher than the priority of the user plane positioning capability of the network device, the terminal may determine to use the user plane positioning.

In a case where the terminal determines that the user plane positioning capability of the terminal is that the terminal has the user plane positioning capability, the user plane positioning capability of the network device is that the network device has the user plane positioning capability, and the priority information is that the priority of the user plane positioning capability of the terminal is lower than the priority of the user plane positioning capability of the network device, the terminal may determine to use the control plane positioning.

In some embodiments, the second indication information is included in at least one of: a registration accept message; or a UE policy container.

It should be noted that the UE policy container may be included in a DL NAS TRANSPORT message, and the policy control function may send Namf_Communication_N1N2MessageTransfer including the DL NAS TRANSPORT message to the AMF, and the AMF transparently transmits the UE policy container therein to the terminal.

In some embodiments, the second indication information is included in the UE policy container, and the user plane positioning capability of the network device belongs to a user plane positioning related parameter. Besides the user plane positioning capability of the network device, the user plane positioning related parameter may also include a user plane positioning related policy, etc.

FIG. 6 is a schematic flowchart of yet another positioning determination method according to embodiments of the present invention. The method shown in these embodiments may be performed by the network device. As shown in FIG. 6, the positioning determination method further includes the following step.

In step S601, first indication information sent by the terminal is received, and the first indication information indicates the user plane positioning capability of the terminal.

It should be noted that the embodiments shown in FIG. 6 may be implemented independently or in combination with at least one of other embodiments in the present invention, which may be selected as needed, and is not limited in the present invention. For example, each of them may be combined with an embodiment as described with reference to at least one of FIG. 2 to FIG. 5.

In some embodiments, the network device may receive the first indication information sent by the terminal. For example, the network device may include a core network device. The core network device may receive the first indication information sent by the terminal in a registration procedure or a policy control function (PCF) update procedure.

The first indication information may indicate the user plane positioning capability of the terminal, and accordingly, the core network device may determine the user plane positioning capability of the terminal according to the first indication information.

In a further embodiment, the network device may determine whether to send the second indication information to the terminal according to the user plane positioning capability of the terminal, and the second indication information indicates the user plane positioning capability of the network device.

For example, the network device sends the second indication information to the terminal in a case where the network device determines, according to the first indication information, that the terminal has the user plane positioning capability.

For example, the network device sends the second indication information to the terminal in a case where the network device determines, according to the first indication information, that the terminal has no user plane positioning capability.

It should be noted that the network device may send the second indication information to the terminal, with consideration or without consideration the user plane positioning capability of the terminal. For example, the network device may send the second indication information to the terminal without determining whether the terminal has the user plane positioning capability (for example, without receiving the first indication information).

In some embodiments, the positioning determination method further includes: determining whether to send the second indication information to the terminal according to the user plane positioning capability of the terminal.

The network device may determine whether to send the second indication information to the terminal according to the user plane positioning capability of the terminal, and the second indication information indicates the user plane positioning capability of the network device.

For example, the network device sends the second indication information to the terminal in a case where the network device determines, according to the first indication information, that the terminal has the user plane positioning capability.

For example, the network device sends the second indication information to the terminal in a case where the network device determines, according to the first indication information, that the terminal does not have the user plane positioning capability.

It should be noted that the network device may send the second indication information to the terminal, with consideration or without consideration the user plane positioning capability of the terminal. For example, the network device may send the second indication information to the terminal without determining whether the terminal has the user plane positioning capability (for example, without receiving the first indication information).

In some embodiments, the user plane positioning capability of the terminal includes at least one of: a support capability for a location service message; or a support capability for a long term evolution positioning protocol message.

In some embodiments, the first indication information is included in at least one of: a 5G mobility management capability; or a UE policy container.

In some embodiments, the first indication information includes a first field, and the first field indicates the support capability of the terminal for the location service message and the support capability of the terminal for the long term evolution positioning protocol message.

The first indication information may indicate both the support capability of the terminal for the location service message and the support capability of the terminal for the long term evolution positioning protocol message through the first field. For example, two situations may be indicated: one is that the terminal supports both the location service message and the long term evolution positioning protocol message, and the other one is that the terminal supports neither the location service message nor the long term evolution positioning protocol message.

For example, the 5G management capability may include 15 octets, each occupies 8 bits. For example, the last 6 bits of the 9th octet and the bits in the 9th to 15th octets are spare, and the first field of the first indication information may occupy 1 bit of the spare bits, for example, the first field may be located at the 3rd bit of the 9th octet.

For example, a value of the first field of 1 may indicate that the terminal supports both the location service message and the long term evolution positioning protocol message. A value of the first field of 0 may indicate that the terminal supports the location service message, but does not support the long-term evolution positioning protocol message.

It should be noted that the position of the first indication information described in the above embodiment is only an example and does not constitute a limitation on the position of the first indication information.

In some embodiments, the first indication information includes a first field and a second field, the first field indicates the support capability of the terminal for the location service message, and the second field indicates the support capability of the terminal for the long term evolution positioning protocol message.

The first indication information may indicate the support capability of the terminal for the location service message and the support capability of the terminal for the long term evolution positioning protocol message, respectively. For example, the first indication information includes the first field and the second field, the first field may indicate whether the terminal supports the location service message, and the second field may indicate whether the terminal supports the long term evolution positioning protocol message.

For example, the 5G management capability may include 15 octets, each occupies 8 bits. For example, the last 6 bits of the 9th octet and the bits in the 9th to 15th octets are spare, and the first indication information may occupy 2 bits of the spare bits, for example, the first indication information may be located at the 3rd and 4th bits of the 9th octet, the first field may be located at the 3rd bit of the 9th octet, and the second field may be located at the 4th bit of the 9th octet.

For example, a value of the first field of 1 may indicate that the terminal supports the long term evolution positioning protocol message, and a value of the first field of 0 may indicate that the terminal does not support the long term evolution positioning protocol message.

For example, a value of the second field of 1 may indicate that the terminal supports the location service message, and a value of the second field of 0 may indicate that the terminal does not support the location service message.

It should be noted that the position of the first indication information described in the above embodiment is only an example and does not constitute a limitation on the position of the first indication information (including the position of the second field or a third field).

In some embodiments, the second indication information is included in at least one of: a registration accept message; or a UE policy container.

In some embodiments, the UE policy container may be included in a downlink non-access stratum transport message. The policy control function may send Namf_Communication_N1N2MessageTransfer including the downlink non-access stratum transport message to AMF, and the AMF transparently transmits the UE policy container therein to the terminal.

In some embodiments, the second indication information is included in the UE policy container, and the user plane positioning capability of the network device belongs to a user plane positioning related parameter, and the terminal may perform the user plane positioning based on the user plane positioning related parameter. Besides the user plane positioning capability of the network device, the user plane positioning related parameter may also include a user plane positioning related policy, etc.

In some embodiments, the network device may send the second indication information to the terminal in the registration procedure, and the second indication information may be included in the registration accept message.

For example, in the registration procedure, the terminal may send a registration request message to the network device.

The registration request message may include a 5G mobility management capability information element. In some embodiments, the 5G mobility management capability may further include the first indication information sent by the terminal to the network device, and the first indication information may indicate the user plane positioning capability of the terminal.

After receiving the registration request message, the network device may initiate 5G mobility management common procedures, e.g. identification, authentication and security procedures during the registration procedure, based on the information in the registration request message.

If the network device accepts the registration request of the terminal, the network device (e.g., AMF) may send the registration accept message to the terminal. The registration accept message may include the above-mentioned second indication information to indicate the user plane positioning capability of the network device.

In some embodiments, the network device may send the second indication information to the terminal in the case where the PCF receives the request of the terminal, and the second indication information may be included in the UE policy container. The request of the terminal includes at least one of: an initial registration request of the terminal, a request to re-register to the 5G system.

For example, the terminal may newly add the first indication information in the UE policy container, and the first indication information may indicate the user plane positioning capability of the terminal. In the registration procedure, the registration request including the UE policy container may be sent to the network device (e.g., AMF).

The PCF may be notified when the AMF receives the UE policy container, and the AMF may send the UE policy container to the PCF, for example, via a Namf_Communication_N1N2Message_Transfer service. Besides the UE policy container, the AMF may also send an SUPI and other information to the PCF.

Further, the PCF may determine the user plane positioning related parameter and send it to the AMF through the UE policy container, and the user plane positioning related parameter includes at least one of: the second indication information, or the user plane positioning related policy. Accordingly, the UE policy container includes the second indication information, and the AMF may transparently transmit the UE policy container received from the PCF to the terminal, for example, the AMF may transmit a downlink non-access stratum transport message including the UE policy container to the terminal, so that the terminal may determine the user plane positioning capability of the network device according to the second indication information in the UE policy container.

In a further embodiment, the terminal may also update the user plane positioning related parameter in the terminal according to the received user plane positioning related parameter, for example, update the user plane positioning capability of the network already existed in the terminal; and send the update result to the AMF.

In a further embodiment, the terminal may determine whether to use the user plane positioning according to the updated user plane positioning capability of the network, the user plane positioning capability of the terminal and configuration information (such as the configuration information described above, which will not be repeated here).

In some embodiments, the network device may send the second indication information to the terminal in a case where the PCF does not receive the request of the terminal, and the second indication information may be included in the UE policy container. The request of the terminal includes at least one of: an initial registration request of the terminal, a request to re-register to the 5G system.

For example, in a case where a first condition is met, the PCF may actively determine whether UE policy information of the terminal needs to be updated. The first condition includes at least one of: a change in the location of the terminal, or a change in S-NSSAI subscribed by the PCF.

In the case where the PCF determines that the UE policy information of the terminal needs to be updated, the PCT may send the UE policy container including updated UE policy information to the AMF, and the updated UE policy information includes the second indication information. The AMF may transparently transmit the UE policy container received from the PCF to the terminal, for example, the AMF may transmit a downlink non-access stratum transport message including the UE policy container to the terminal, so that the terminal may determine the user plane positioning capability of the network device according to the second indication information in the UE policy container.

In a further embodiment, the terminal may also update the user plane positioning related parameter in the terminal according to the received user plane positioning related parameter, for example, update the user plane positioning capability of the network already existed in the terminal; and send the update result to the AMF.

In a further embodiment, the terminal may determine whether to use the user plane positioning according to the updated user plane positioning capability of the network, the user plane positioning capability of the terminal and configuration information (such as the configuration information described above, which will not be repeated here).

In some embodiments, after the terminal determines whether to use the user plane positioning according to the user plane positioning capability, the terminal may initiate a user plane connection procedure. For the user plane connection procedure, reference may be made to the clause 3GPP TS 23.273, which will not be repeated in the present invention.

In some embodiments, the names of various information are not limited to those recorded in above embodiments, and terms such as "information", "message", "signal", "signaling", "report", "configuration", "indication", "instruction", "command", "channel", "parameter", "domain", "field", "symbol", "symbol", "code element", "codebook", "codeword", "codepoint", "bit", "data", "program", and "chip" may be used interchangeably.

In some embodiments, the terms "downlink control information (DCI)", "downlink (DL) assignment", "DL DCI", "uplink (UL) grant", "UL DCI" and the like may be used interchangeably.

In some embodiments, the terms "radio", "wireless", "radio access network (RAN)", "access network (AN)", "RAN-based" and the like may be used interchangeably.

In some embodiments, the terms "acquire", "obtain", "get", "reception", "transmission", "bidirectional transmission", "transmission and/or reception" are interchangeable, and may be interpreted as receiving from other entities, obtaining from a protocol, obtaining from a high level, acquiring by self-processing, autonomous implementation, etc.

In some embodiments, terms such as "send", "emit", "report", "distribute", "transmit", "bidirectional transmission", "send and/or receive" may be used interchangeably.

In some embodiments, the terms "certain", "preset", "predetermined", "set", "indicated", "any", "arbitrary", "first", etc., may be used interchangeably, and the terms "certain A", "preset A", "predetermined A", "set A", "indicated A", etc., may be used interchangeably.

It should be noted that for other contents involved in embodiments of the present invention, please refer to the description of the relevant contents in the previous embodiments, which will not be repeated here.

Corresponding to the aforementioned embodiments of the positioning determination method, the present invention also provides embodiments of a positioning determination apparatus.

FIG. 7 is a schematic block diagram of a positioning determination apparatus 700 according to embodiments of the present invention. As shown in FIG. 7, the positioning determination apparatus 700 includes:
a processing module 701, configured to determine whether to use user plane positioning according to a user plane positioning capability.

In some embodiments, the user plane positioning capability includes at least one of: a user plane positioning capability of the terminal; or a user plane positioning capability of a network device.

In some embodiments, the user plane positioning capability of the terminal includes at least one of: a support capability for a location service message; or a support capability for a long term evolution positioning protocol message.

In some embodiments, the apparatus further includes: a sending module, configured to send first indication information to the network device, and the first indication information indicates the user plane positioning capability of the terminal.

In some embodiments, the first indication information includes a first field, and the first field indicates the support capability of the terminal for the location service message and the support capability of the terminal for the long term evolution positioning protocol message.

In some embodiments, the first indication information includes a first field and a second field, the first field indicates the support capability of the terminal for the location service message, and the second field indicates the support capability of the terminal for the long term evolution positioning protocol message.

In some embodiments, the first indication information is included in at least one of: a 5G mobility management capability; or a UE policy container.

In some embodiments, the apparatus further includes: a receiving module, configured to receive second indication information sent by the network device, and the second indication information indicates the user plane positioning capability of the network device.

In some embodiments, the second indication information is included in at least one of: a registration accept message; or a UE policy container.

In some embodiments, the second indication information is included in the UE policy container, and the user plane positioning capability of the network device belongs to a user plane positioning related parameter.

In some embodiments, the processing module is further configured to update, according to the user plane positioning related parameter, a user plane positioning related parameter in the terminal.

Of course, the positioning determination apparatus 700 may also include other modules, such as a communication module, a storage module, etc., which is not limited in the present invention.

FIG. 8 is a schematic block diagram of a positioning determination apparatus 800 according to embodiments of the present invention. As shown in FIG. 8, the positioning determination apparatus 800 includes:
a sending module 801, configured to communicate with the terminal that performs the positioning determination method as described in any of the above embodiments.

In some embodiments, the second indication information is further configured for the terminal to determine whether to use user plane positioning.

In some embodiments, the second indication information is included in at least one of: a registration accept message; or a UE policy container.

In some embodiments, the second indication information is included in the UE policy container, and the user plane positioning capability of the network device belongs to a user plane positioning related parameter.

In some embodiments, the sending module is configured to receive first indication information sent by the terminal, and the first indication information indicates a user plane positioning capability of the terminal.

In some embodiments, the positioning determination apparatus further includes: a processing module, configured to determine whether to send the second indication information to the terminal according to the user plane positioning capability of the terminal.

In some embodiments, the first indication information includes a first field, and the first field indicates a support capability of the terminal for a location service message and a support capability of the terminal for a long term evolution positioning protocol message.

In some embodiments, the first indication information includes a first field and a second field, the first field indicates a support capability of the terminal for a location service message, and the second field indicates a support capability of the terminal for a long term evolution positioning protocol message.

In some embodiments, the first indication information is included in at least one of: a 5G mobility management capability; or a UE policy container.

In some embodiments, the sending module is configured to send second indication information to the terminal, and the second indication information indicates the user plane positioning capability of the network device.

Of course, the positioning determination apparatus 800 may also include other modules, such as a processing module, a storage module, etc., which is not limited in the present invention.

For the apparatus embodiments, since they basically correspond to the method embodiments, for relevant parts, reference may be made to the corresponding description of the method embodiments. The apparatus embodiments described above are explanatory, the modules described as separate components may be or may not be physically separated, and components displayed as modules may be or may not be physical modules, that is, they may be located in one place, or they may be distributed to multiple network modules. Some or all of the modules may be selected as needs to achieve the purpose of the technical solutions of embodiments of the present invention, which may be understood and implemented by those skilled in the art without paying creative work.

Embodiments of the present invention further provide a communication device, which includes: one or more processors; and the processor is configured to call instructions to cause the communication device to perform the positioning determination method as described in any of the above embodiments.

Embodiments of the present invention further provide a communication system, which includes a terminal and a network device, the terminal is configured to perform the positioning determination method performed by the terminal as described in any of the above embodiments, and the network device is configured to perform the positioning determination method performed by the network device as described in any of the above embodiments.

Embodiments of the present invention further provide a storage medium having stored therein instructions that, when executed on a communication device, cause the communication device to perform the positioning determination method as described in any of the above embodiments.

Embodiments of the present invention further provide an apparatus for implementing any of the above methods. For example, an apparatus is provided, the apparatus includes one or more units or modules for implementing various steps performed by the terminal as described in any of the above methods. For another example, another apparatus is also proposed, which includes one or more units or modules for implementing various steps performed by the network device (such as an access network device, a core network function node, a core network device, etc.) as described in any of the above methods.

It should be understood that the division of the units or modules in the above apparatuses is only a division of logical functions, and all or part of these units or modules may be integrated into one physical entity or may be physically separated as required in implementation. In addition, the units or modules in the apparatus may be implemented in the form of processor calling software: for example, the apparatus includes a processor, the processor is connected to a memory, instructions are stored in the memory, and the processor calls the instructions stored in the memory to implement any of the above methods or implement the functions of various units or modules of the above apparatus. The processor is, for example, a general-purpose processor, such as a central processing unit (CPU) or a microprocessor, and the memory is a memory inside or outside the apparatus. Alternatively, the units or modules in the apparatus may be implemented in the form of hardware circuit, and the hardware circuit may be designed to implement the functions of some or all of the units or modules. The above hardware circuit may be understood as one or more processors. For example, in an implementation, the above hardware circuit is an application-specific integrated circuit (ASIC), and the functions of some or all of the above units or modules are realized by designing the logical relationship of components in the circuit. For example, in another implementation, the above hardware circuit may be realized by a programmable logic device (PLD). Taking a field programmable gate array (FPGA) as an example, it may include a large number of logic gate circuits, and the connection relationship between the logic gate circuits is configured by a configuration file, so as to realize the functions of some or all of the above units or modules. All units or modules of the above apparatus may be realized in the form of processor calling software or in the form of hardware circuit, or a part of them may be realized in the form of processor calling software, and the rest may be realized in the form of hardware circuit.

In embodiments of the present invention, the processor is a circuit with signal processing capability. In an implementation, the processor may be a circuit with instruction reading and running capability, such as a central processing unit (CPU), a microprocessor, a graphics processing unit (GPU) (which may be understood as a microprocessor), or a digital signal processor (DSP), etc. In another implementation, the processor may realize certain functions through the logical relationship of the hardware circuit, and the logical relationship of the hardware circuit is fixed or reconfigurable. For example, the processor is a hardware circuit implemented by an application-specific integrated circuit (ASIC) or a programmable logic device (PLD), such as FPGA. In a reconfigurable hardware circuit, the processor loads a configuration file to implement the process of hardware circuit configuration, which may be understood as a process where the processor loads instructions to implement the functions of some or all of the above units or modules. In addition, it may also be a hardware circuit designed for artificial intelligence, which may be understood as an ASIC, such as a neural network processing unit (NPU), a tensor processing unit (TPU), a deep learning processing unit (DPU), etc.

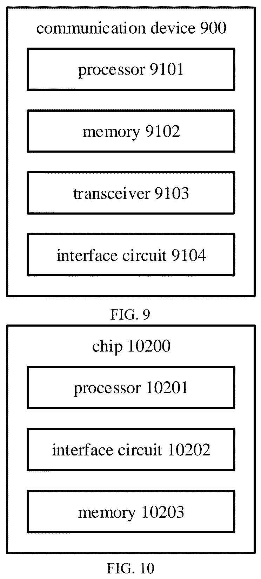

FIG. 9 is a schematic diagram of a communication device 9100 according to embodiments of the present invention. The communication device 9100 may be a network device (e.g., an access network device, a core network device, etc.), or a terminal (e.g., a user equipment, etc.), or a chip, chip system or processor that supports a network device to implement any of the above methods, or a chip, chip system or processor that supports a terminal to implement any of the above methods. The communication device 9100 may be configured to implement the method described in the above method embodiments, and for details, reference may be made to the description in the above method embodiments.

As shown in FIG. 9, the communication device 9100 includes one or more processors 9101. The processor 9101 may be a general-purpose processor or a dedicated processor, for example, a baseband processor or a central processing unit. The baseband processor may be configured to process the communication protocol and the communication data, and the central processing unit may be configured to control the communication device (such as a base station, a baseband chip, a terminal, a terminal chip, a DU or a CU, etc.), execute a program, and process the data of the program. The processor 9101 is configured to call instructions to cause the communication device 9100 to perform any of the above methods.

In some embodiments, the communication device 9100 further includes one or more memories 9102 for storing instructions. Optionally, all or part of the memories 9102 may also be set outside the communication device 9100.

In some embodiments, the communication device 9100 further includes one or more transceivers 9103. In a case where the communication device 9100 includes one or more transceivers 9103, the communication steps, such as sending and receiving steps, in the above methods are performed by the transceiver 9103, and the other steps are performed by the processor 9101.

In some embodiments, the transceiver may include a receiver and a transmitter, and the receiver and the transmitter may be separate or integrated together. Optionally, the terms such as transceiver, transceiver unit, transceiver machine, transceiver circuit, etc. are interchangeable, the terms such as transmitter, transmitting unit, transmitting machine, transmitting circuit, etc. are interchangeable, and the terms such as receiver, receiving unit, receiving machine, receiving circuit, etc. are interchangeable.

Optionally, the communication device 9100 further includes one or more interface circuits 9104, which are connected to the memory 9102. The interface circuit 9104 may be configured to receive signals from the memory 9102 or other devices, and send signals to the memory 9102 or other devices. For example, the interface circuit 9104 may read instructions stored in the memory 9102 and send the instructions to the processor 9101.

The communication device 9100 described in the above embodiments may be a network device or a terminal, but the scope of the communication device 9100 described in the present invention is not limited thereto, and the structure of the communication device 9100 may not be limited by FIG. 9. The communication device may be a stand-alone device or may be part of a larger device. For example, the communication device may be: 1) a stand-alone integrated circuit (IC), a chip, or a chip system or subsystem; (2) a set of one or more ICs, optionally, the set of ICs may also include a storage component for storing data and programs; (3) an ASIC, such as a Modem; (4) a module that may be embedded in other devices; (5) a receiver, a terminal, an intelligent terminal, a cellular phone, a wireless device, a handheld machine, a mobile unit, a vehicle-mounted device, a network device, a cloud device, an artificial intelligence device, etc.; (6) others.

FIG. 10 is a schematic diagram of a chip according to embodiments of the present invention. In the case where the communication device 9100 may be a chip or chip system, reference may be made to the schematic diagram of the structure of the chip 10200 shown in FIG. 10, but the present invention is not limited thereto.

The chip 10200 includes one or more processors 10201, and the processor 10201 is configured to call instructions to cause the chip 10200 to execute any of the above methods.

In some embodiments, the chip 10200 further includes one or more interface circuits 10202, the interface circuit 10202 is connected to the memory 10203, the interface circuit 10202 may be used to receive signals from the memory 10203 or other devices, and the interface circuits 10202 may be used to send signals to the memory 10203 or other devices.

For example, the interface circuit 10202 may read the instructions stored in the memory 10203 and send the instructions to the processor 10201. Optionally, the terms such as interface circuit, interface, transceiver pin, transceiver, etc. are interchangeable.

In some embodiments, the chip 10200 further includes one or more memories 10203 for storing instructions. Optionally, all or part of the memories 10203 may be set outside the chip 10200.

The present invention also provides a storage medium having stored therein instructions that, when run on the communication device 9100, cause the communication device 9100 to perform any of the above methods. Optionally, the storage medium is an electronic storage medium. Optionally, the storage medium is a computer-readable storage medium, but is not limited thereto, and it may also be a storage medium readable by other devices. Optionally, the storage medium may be a non-transitory storage medium, but is not limited thereto this, and it may also be a temporary storage medium.

The present invention also provides a program product that, when executed by the communication device 9100, causes the communication device 9100 to perform any of the above methods. Optionally, the program product is a computer program product.

The present invention also provides a computer program that, when run on a computer, causes the computer to execute any one of the above methods.

## Claims

1. A positioning determination method, performed by a terminal, comprising:
determining whether to use user plane positioning according to a user plane positioning capability.

2. The method according to claim 1, wherein the user plane positioning capability comprises at least one of:
a user plane positioning capability of the terminal; or
a user plane positioning capability of a network device.

3. The method according to claim 2, wherein the user plane positioning capability of the terminal comprises at least one of:
a support capability for a location service message; or
a support capability for a long term evolution positioning protocol message.

4. The method according to claim 3, further comprising:
sending first indication information to the network device, wherein the first indication information indicates the user plane positioning capability of the terminal.

5. The method according to claim 4, wherein the first indication information comprises a first field, and the first field indicates the support capability of the terminal for the location service message and the support capability of the terminal for the long term evolution positioning protocol message.

6. The method according to claim 4, wherein the first indication information comprises a first field and a second field, the first field indicates the support capability of the terminal for the location service message, and the second field indicates the support capability of the terminal for the long term evolution positioning protocol message.

7. The method according to any one of claims 4 to 6, wherein the first indication information is included in at least one of:
a 5G mobility management capability; or
a UE policy container.

8. The method according to claim 2, further comprising:
receiving second indication information sent by the network device, wherein the second indication information indicates the user plane positioning capability of the network device.

9. The method according to claim 8, wherein the second indication information is included in at least one of:
a registration accept message; or
a UE policy container.

10. The method according to claim 9, wherein the second indication information is included in the UE policy container, and the user plane positioning capability of the network device belongs to a user plane positioning related parameter.

11. The method according to claim 10, further comprising:
updating, according to the user plane positioning related parameter, a user plane positioning related parameter in the terminal.

12. A positioning determination method, performed by a network device, comprising:
sending second indication information to a terminal, wherein the second indication information indicates a user plane positioning capability of the network device.

13. The method according to claim 12, wherein the second indication information is further configured for the terminal to determine whether to use user plane positioning.

14. The method according to claim 12 or 13, wherein the second indication information is included in at least one of:
a registration accept message; or
a UE policy container.

15. The method according to claim 14, wherein the second indication information is included in the UE policy container, and the user plane positioning capability of the network device belongs to a user plane positioning related parameter.

16. The method according to any one of claims 12 to 15, further comprising:
receiving first indication information sent by the terminal, wherein the first indication information comprises a first field, and the first field indicates a user plane positioning capability of the terminal.

17. The method according to claim 16, further comprising:
determining whether to send the second indication information to the terminal according to the user plane positioning capability of the terminal.

18. The method according to claim 16 or 17, wherein the first indication information comprises a first field, and the first field indicates a support capability of the terminal for a location service message and a support capability of the terminal for a long term evolution positioning protocol message.

19. The method according to claim 16 or 17, wherein the first indication information comprises a first field and a second field, the first field indicates a support capability of the terminal for a location service message, and the second field indicates a support capability of the terminal for a long term evolution positioning protocol message.

20. The method according to any one of claims 16 to 19, wherein the first indication information is included in at least one of:
a 5G mobility management capability; or
a UE policy container.

21. The method according to any one of claims 16 to 19, wherein the user plane positioning capability of the terminal comprises at least one of:
a support capability for a location service message; or
a support capability for a long term evolution positioning protocol message.

22. A positioning determination apparatus, comprising:
a processing module, configured to determine whether to use user plane positioning according to a user plane positioning capability.

23. A positioning determination apparatus, comprising:
a sending module, configured to send second indication information to a terminal, wherein the second indication information indicates a user plane positioning capability of a network device.

24. A communication device, comprising:
one or more processors;
wherein the processor is configured to call instructions to cause the communication device to perform the positioning determination method according to any one of claims 1-11 or 12-21.

25. A communication system, comprising: a terminal and a network device, wherein the terminal is configured to perform the positioning determination method according to any one of claims 1-11, and the network device is configured to perform the positioning determination method according to any one of claims 12-21.

26. A storage medium having stored therein instructions that, when executed on a communication device, cause the communication device to perform the positioning determination method according to any one of claims 1-11 or 12-21.
